# EUROPÄISCHE PATENTANMELDUNG

(11) **EP 0 969 237 A2**
(43) Veröffentlichungstag der Anmeldung: **05.01.2000**
(21) Anmeldenummer: 99110701.2
(22) Anmeldetag: 02.06.1999
(51) Int. Cl.: F16L 11/12

(54) **Kunststoffrohr**

(30) Priorität: 03.07.1998 DE 19829704; 19.09.1998 DE 19843034
(71) Anmelder: Egeplast Werner Strumann GmbH & Co., 48282 Emsdetten (DE)
(72) Erfinder: Ulrich, Herbert, 48282 Emsdetten (DE); Werner, Joachim Dr., 46499 Hamminkeln (DE); Schröder, Günter, 23611 Bad Schwartau (DE)
(74) Vertreter: Habbel, Hans-Georg, Dipl.-Ing.

(57) **Zusammenfassung**

Die Erfindung bezieht sich auf ein Kunststoffrohr (1), das zur Verringerung des Zug- bzw. Druckwiderstandes beim Verlegen der Rohre an der Außenseite der Rohrwand über die eigentliche Rohrwand vorstehende Erhebungen (3) aufweist, auf denen das Rohr aufliegt, oder das zur Verringerung des Zug- bzw. Druckwiderstandes beim Verlegen der Rohre an der Außenseite der Rohrwand eine Gleitschicht (5) besitzt.

## Beschreibung

Die Erfindung bezieht sich auf ein Kunststoffrohr.

Kunststoffrohre, insbesondere aus Polyolefin sind in großem Umfang im Einsatz und dienen beispielsweise als drucklose Rohre für den Schutz von Kabel oder sonstigen Leitungen oder als Druckrohre zur Führung von Trinkwasser, als wickelbare Rohre und Schläuche für Bewässerungsanlagen und weiterhin zur Abführung von entsprechenden Flüssigkeiten. Da derartige Rohre aufgrund der physikalischen Eigenschaften des Polyolefins sehr abriebempfindlich sind, ist bereits vorgeschlagen worden (DE 41 24 825 C1), in der Rohrwand und/oder in einer die Rohrwand umgebenden Außenhülle Mikrokörper hoher Abriebfestigkeit vorzusehen.

Diese Mikrokörper hoher Abriebfestigkeit haben die Aufgabe, der Außenseite des Rohres eine hohe Widerstandsfähigkeit gegen Oberflächenabrieb zu verleihen, wobei gleichzeitig eine höhere Ringsteifigkeit bewirkt wird und eine höhere Zeitstandsfestigkeit bewirkt wird.

Beim Verlegen derartiger Rohre im Erdreich oder 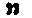 Rohr in Rohr" oder beim 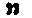 berstlining" oder relining" oder auch von Bewässerungsrohren auf dem Boden treten hohe Reibungswiderstände auf, die einerseits einen großen maschinellen Kraftaufwand erforderlich machen, andererseits Zugspannungen in die Rohrwand einleiten, die unerwünscht sind, da sie zur Beschädigung der Rohrwand führen können.

Die DE 25 55 605 A1 beschreibt ein Rohr aus Kunststoff für die Versorgung von Hausanschlüssen oder anderen Rohrleitungen in Gebäuden und in der Industrie. Der Erfinder dieser bekannten Anordnung hat als nachteilig empfunden, daß die glatte äußere Oberfläche der Rohre den Monteuren das Ergreifen des Rohres in der Weise erschwert, daß die zum Festziehen einer Rohrverschraubung unter Verwendung eines Rohr-oder Drehmomentenschlüssels erforderliche Oberflächenprofilierung fehlt.

Dem zum Stand der Technik gehörenden Vorschlag liegt daher die Aufgabe zugrunde, bei Rohren aus Kunststoff die Übertragung eines Drehmomentes zu ermöglichen.

In der GB 1 578 692 wird ein Kunststoffrohr vorgeschlagen, das mit über den Außenumfang des Rohres verteilten Abstandshaltern ausgerüstet ist, die die Aufgabe haben, im Abstand vom Rohrmantel einen Filter anzuordnen, so daß ein Flüssigkeitsweg für das Wasser geschaffen wird, wobei solche Rohre als Drainagerohre eingesetzt werden sollen. In dieser Literaturstelle wird das Problem, daß beim Verlegen der Rohre geringere Zug- und Druckkräfte angestrebt werden, nicht angesprochen, sondern im Gegenteil, durch die Anordnung der über den Außenumfang des Rohres vorstehenden Rippen würde beim Verlegen der Rohre insbesondere im Erdreich, dann, wenn das Rohr in dem Boden eingepreßt oder eingezogen würde, ein erheblich größerer Widerstand geschaffen, als wenn die Rohroberfläche einfach eben und glatt wäre.

Der Erfindung liegt die Aufgabe zugrunde, ein Kunststoffrohr vorzuschlagen, bei dem die gegenüber den bekannten Rohren erforderlichen Zug- bzw. Druckkräfte beim Verlegen der Rohre verringert werden.

Diese der Erfindung zugrundeliegende Aufgabe wird durch die Lehre des Hauptanspruches gelöst.

Eine Lösung dieser Aufgabe wird auch durch den Vorschlag des selbständigen Anspruches 2 erreicht und vorteilhafte Ausgestaltungen sind in den Unteransprüchen 3 bis 5 erläutert.

Mit anderen Worten ausgedrückt werden zwei Lösungswege zur Lösung der Aufgabe vorgeschlagen:

Einmal ist vorgesehen, daß zur Verringerung des Zug- bzw. Druckwiderstandes beim Verlegen der Rohre an der Außenseite der Rohrwand über die eigentliche Rohrwand vorstehende Erhebungen vorgesehen sind, auf denen das Rohr aufliegt. Hierdurch wird also die Auflagefläche des Rohres auf dem Boden oder in dem Boden oder in einem Rohr verringert, wodurch automatisch der Zug- bzw. Druckwiderstand des Rohres beim Verlegen herabgesetzt wird.

Zum anderen wird die der Erfindung zugrundeliegende Aufgabe auch dadurch gelöst, daß zur Verringerung des Zug- bzw. Druckwiderstandes beim Verlegen der Rohre an der Außenseites der Rohrwand eine Gleitschicht vorgesehen ist. Hierdurch liegt also das Rohr weiterhin mit seinem Umfang entweder auf dem Boden auf oder vollflächig liegt das Rohr im Boden an der Bodenwandung an, aber durch die aufgebrachte Gleitschicht wird der Zug- bzw. Druckwiderstand verringert, wobei diese Gleitschicht so ausgebildet sein kann, daß sie sich bei Verlegen der Rohre im Boden auflöst und vom Boden absorbiert wird oder beim Verlegen der Rohre auf dem Boden, wie beispielsweise bei Bewässerungsleitungen, durch Witterungseinflüsse aufgelöst und abgelöst werden kann. Die Gleitschicht kann aber auch durch besonders gleitfähigen Kunststoff gebildet sein. Als besonders vorteilhafte Ausgestaltung wird vorgesehen, daß die Erhebungen als in Längsrichtung verlaufende federartige Leisten ausgebildet sind, wobei der Begriff 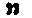 federartig" von dem Begriff 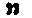 Nut und Feder" abgeleitet ist.

Die Erhebungen können auch als auf der Rohrwand angeordnete Noppen gestaltet sein, die gegenüber dem vorgenannten Vorschlag der federartigen Leisten eine noch geringere Auflagefläche und Berührungsfläche der Rohrwand mit dem umgebenden Boden bewirken.

Ganz allgemein gesprochen können die Erhebungen durch eine orangenhautartige Ausbildung der Außenseite des Rohres gebildet werden.

Ausführungsbeispiele der Erfindung werden nachfolgend anhand der Zeichnungen erläutert. Die Zeichnungen zeigen dabei in
- Fig. 1: die Ansicht auf eine erste Ausführungsform eines Rohres, in
- Fig. 1A: einen Schnitt durch das Rohr gemäß Fig. 1 zur Verdeutlichung möglicher Ausbildungen der Leisten, in
- Fig. 2: eine abgeänderte Ausführungsform des erfindungsgemäßen Rohres und in
- Fig. 2A: einen Schnitt durch diese Ausführungsform und in
- Fig. 3: ein Rohr mit einer auf der Außenseite des Rohrmantels aufgebrachten Gleitschicht.

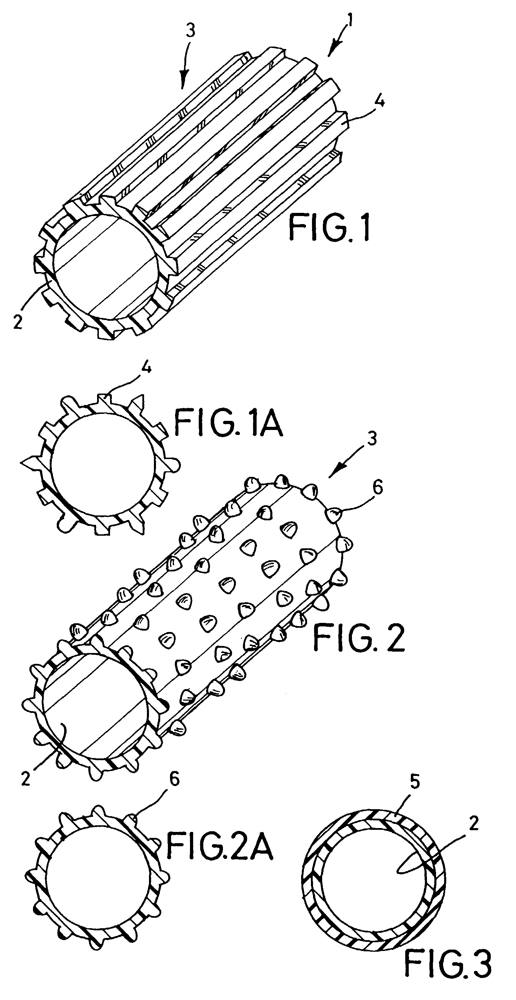

In den Figuren ist mit 1 ein Kunststoffrohr bezeichnet, das eine Rohrwand 2 aufweist. Auf dieser Rohrwand 2 sind gemäß den Ausführungsformen gemäß Fig. 1 und 2 Erhebungen 3 vorgesehen, die gemäß Fig. 1 als federartige Leisten 4 ausgebildet sind.

Während in Fig. 1 eine einfache federartige Leiste 4 dargestellt ist, können im Sinn der vorliegenden Erfindung diese federartigen Leisten - wie in Fig. 1A dargestellt - zugespitzt und/oder abgerundet sein. Diese verschiedenen Ausführungsformen können an einem Rohr verwirklicht werden, aber es ist durchaus möglich, auch Rohre nur mit der einen oder anderen ausgebildeten Leiste herzustellen.

Weiterhin liegt es im Rahmen der Erfindung, daß die federartigen Leisten nicht nur geradlinig in Längsrichtung des Rohres verlaufend ausgebildet sind, sondern diese Leisten können sich aber auch zur Rohrlängsachse in einem Winkel erstrecken.

Grundsätzlich sei darauf hingewiesen, daß unter den Schutzumfang der Erfindung auch andere Erhebungen fallen, die z. B. schuppenartig ausgebildet sind.

Bei der Ausführungsform gemäß Fig. 2 und 2A sind die Erhebungen 3 als Noppen 6 gestaltet, die über die Außenseite des Rohrmantels verteilt angeordnet sind. Hierbei kann im Rahmen der Erfindung liegend auch weiterhin so vorgegangen werden, daß diese Noppen 6 aus einem sehr gleitfähigen Material hergestellt werden.

Bei allen eingesetzten, die Erfindung verwirklichenden Konstruktionen muß bedacht werden, daß die Rohre, auf die sich die Erfindung bezieht, nicht nur im Boden oder auf dem Boden verlegt werden, sondern auch in Rohren, z. B. beim 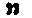 berstlining"-Verfahren oder beim 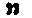 relining"-Verfahren, und daß die zu verlegenden Rohre nicht nur gezogen werden, so daß ein hoher Zugwiderstand auftritt, sondern auch eingedrückt werden, so daß am Rohr ein hoher Druckwiderstand erzeugt wird.

Die Darstellung in Fig. 3 soll verdeutlichen, daß auf dem Rohrmantel 2 auf dessen Außenseite eine Gleitschicht 5 vorgesehen sein kann, die den Zug- bzw. Druckwiderstand herabsetzt, wobei diese Gleitschicht 5 aus einem entsprechenden gleitfähigen Werkstoff bestehen kann, der schmierfilmartig wirkt, aber auch durch einen zusätzlichen Kunststoff gebildet werden kann, der in besonderer Weise gleitfähig ist.

Zusammenfassend kann also festgestellt werden, daß durch eine Oberflächenstrukturveränderung die Außenseite des Rohres so gestaltet wird, daß bei Verlegen der Rohre Unterlage oder Übertage, d. h. im Boden oder auf dem Boden oder in einem Rohr der Zug- bzw. Druckwiderstand beim Verlegen der Rohre verringert wird.

## Patentansprüche

1. Kunststoffrohr mit einer strukturierten Außenseite der Rohrwand, dadurch gekennzeichnet, daß zur Verringerung des Zug- bzw. Druckwiderstandes beim Verlegen der Rohre an der Außenseite der Rohrwand (2) über die eigentliche Rohrwand (2) vorstehende Erhebungen (3) vorgesehen sind, auf denen das Rohr aufliegt.

2. Kunststoffrohr, dadurch gekennzeichnet, daß zur Verringerung des Zug- bzw. Druckwiderstandes beim Verlegen der Rohre an der Außenseite der Rohrwand eine Gleitschicht (5) aufgetragen ist.

3. Kunststoffrohr nach Anspruch 1, dadurch gekennzeichnet, daß die Erhebungen (3) als federartige Leisten (4) ausgebildet sind.

4. Kunststoffrohr nach Anspruch 1, dadurch gekennzeichnet, daß die Erhebungen (3) als auf dem Rohrmantel (2) angeordnete Noppen (6) ausgebildet sind.

5. Kunststoffrohr nach Anspruch 1, dadurch gekennzeichnet, daß die Erhebungen (3) durch eine orangehautartige Ausbildung der Außenseite des Rohrmantels (2) gebildet sind.
